# EUROPEAN PATENT APPLICATION

(11) **EP 4 489 477 A1**
(43) Date of publication of application: **08.01.2025**
(21) Application number: 22929395.6
(22) Date of filing: 04.03.2022
(51) Int. Cl.: H04W 40/22, H04W 72/04, H04L 5/00, H04B 7/155

(54) **INTELLIGENT RELAY CONTROL METHOD, AND APPARATUS THEREFOR**

(71) Applicant: Beijing Xiaomi Mobile Software Co., Ltd., Beijing 100085 (CN)
(72) Inventor: ZHU, Yajun, Beijing 100085 (CN)
(74) Representative: Dehns Germany Partnerschaft mbB
(86) International application number: PCT/CN2022/079434
(87) International publication number: WO 2023/164952

(57) **Abstract**

An intelligent relay control method, which can be applied to the technical field of communications. The method executed by an intelligent relay comprises: an intelligent relay receiving time-division duplexing (TDD) configuration information that is sent by a network device, wherein the TDD configuration information is used for indicating a transceiving behavior of an intelligent relay for a first signal and/or a second signal at a specific time. In this way, by means of TDD configuration information, a transceiving behavior for each signal at a specific time can be determined, such that the uplink and downlink control of each signal by an intelligent relay is realized, and the correctness of transceiving information is further ensured.

## Description

### TECHNICAL FIELD

The disclosure relates to the field of communications technology, in particular to a method for controlling a smart repeater and an apparatus therefor.

### BACKGROUND

With the continuous development of radio communication, users have higher and higher requirements for communication capabilities. Generally, a smart repeater may be used to expand the coverage of a cell. However, when a duplexing mode of an uplink signal and a downlink signal of the smart repeater is a Time-Division Duplex (TDD) mode, how to control the smart repeater to correctly receive and transmit signals becomes an urgent problem to be solved.

### SUMMARY

Embodiments of the disclosure provide a method for controlling a smart repeater, and an apparatus therefor. At least one of the uplink situation or the downlink situation corresponding to a specific time may be determined based on TDD configuration information, such that the uplink or downlink control of each signal by a smart repeater is realized.

In a first aspect, embodiments of the disclosure provide a method for controlling a smart repeater. The method is performed by a smart repeater. The method includes: receiving time-division duplex (TDD) configuration information transmitted by a network device, in which the configuration information is used for indicating at least one of a receiving behavior or a transmitting behavior of the smart repeater for a first signal and/or a second signal at a specific time.

In this technical solution, the smart repeater may receive the TDD configuration information, transmitted by the network device, used for indicating the receiving and/or transmitting behaviors of the smart repeater for the first signal and/or the second signal at the specific time. In this way, by means of the TDD configuration information, the receiving and/or transmitting behaviors for each signal at the specific time may be determined, such that the uplink or downlink control of each signal by a smart repeater is realized, thereby further ensuring the correctness of receiving or transmitting information.

In a second aspect, embodiments of the disclosure provide a method for controlling a smart repeater. The method is performed by a network device. The method includes: transmitting TDD configuration information to a smart repeater, in which the configuration information is used for indicating at least one of a receiving behavior or a transmitting behavior of the smart repeater for a first signal and/or a second signal at a specific time.

In this technical solution, the network device may transmit, to the smart repeater, the TDD configuration information used for indicating the receiving and/or transmitting behaviors of the smart repeater for the first signal and/or the second signal at the specific time. In this way, by means of the TDD configuration information, at least one of the receiving behavior or the transmitting behavior for each signal at a specific time may be determined, such that the uplink or downlink control of each signal by a smart repeater is realized, thereby further ensuring the correctness of receiving or transmitting information.

In a third aspect, embodiments of the disclosure provide a communication apparatus, at a smart repeater side. The apparatus includes:

a transceiving module configured to receive Time-Division Duplex (TDD) configuration information transmitted by a network device, in which the configuration information is used for indicating at least one of a receiving behavior or a transmitting behavior of a smart repeater for a first signal and/or a second signal at a specific time.

In a fourth aspect, embodiments of the disclosure provide a communication apparatus, at a network device side. The apparatus includes:

a transceiving module, configured to transmit Time-Division Duplex (TDD) configuration information to a smart repeater, in which the configuration information is used for indicating at least one of a receiving behavior or a transmitting behavior of the smart repeater for a first signal and/or a second signal at a specific time.

In a fifth aspect, embodiments of the disclosure provide a communication apparatus. The communication apparatus includes a processor. When the processor calls a computer program in a memory, the method in the above-mentioned first aspect is performed.

In a sixth aspect, embodiments of the disclosure provide a communication apparatus. The communication apparatus includes a processor. When the process calls a computer program in a memory, the method in the above-mentioned second aspect is performed.

In a seventh aspect, embodiments of the disclosure provide a communication apparatus. The communication apparatus includes a processor and a memory having a computer program stored thereon. The processor performs the computer program stored in the memory, to cause the communication apparatus to perform the method in the above-mentioned first aspect.

In an eighth aspect, embodiments of the disclosure provide a communication apparatus. The communication apparatus includes a processor and a memory having a computer program stored thereon. The processor performs the computer program stored in the memory to cause the communication apparatus to perform the method in the above-mentioned second aspect.

In a ninth aspect, embodiments of the disclosure provide a communication apparatus. The apparatus includes a processor and an interface circuit. The interface circuit is configured to receive code instructions and transmit the code instructions to the processor. The processor is configured to run the code instructions, to cause the apparatus to perform the method in the above-mentioned first aspect.

In a tenth aspect, embodiments of the disclosure provide a communication apparatus. The apparatus includes a processor and an interface circuit. The interface circuit is configured to receive code instructions and transmit the code instructions to the processor. The processor is configured to run the code instructions, to cause the apparatus to perform the method in the above-mentioned second aspect.

In an eleventh aspect, embodiments of the disclosure provide a system for controlling a smart repeater. The system includes the communication apparatus in the third aspect and the communication apparatus in the fourth aspect. Or, the system includes the communication apparatus in the fifth aspect and the communication apparatus in the sixth aspect. Or, the system includes the communication apparatus in the seventh aspect and the communication apparatus in the eighth aspect. Or, the system includes the communication apparatus in the ninth aspect and the communication apparatus in the tenth aspect.

In a twelfth aspect, embodiments of the disclosure provide a computer-readable storage medium having instructions used by the above-mentioned terminal device stored thereon. When the instructions are executed, the terminal device is caused to perform the method in the above-mentioned first aspect.

In a thirteenth aspect, embodiments of the disclosure provide a computer-readable storage medium having instructions used by the above-mentioned network device stored thereon. When the instructions are executed, the network device is caused to perform the method in the above-mentioned second aspect.

In a fourteenth aspect, the disclosure further provides a computer program product including a computer program. When the computer program runs on a computer, a computer is caused to perform the method in the above-mentioned first aspect.

In a fifteenth aspect, the disclosure further provides a computer program product including a computer program. When the computer program runs on a computer, a computer is caused to perform the method in the above-mentioned second aspect.

In a sixteenth aspect, the disclosure provides a chip system. The chip system includes at least one processor and interface, for supporting a terminal device to realize functions involved in the first aspect, for example, to determine or process at least one of data and information involved in the above-mentioned methods. In a possible design, the chip system further includes a memory. The memory is configured to store a necessary computer program and data of the terminal device. The chip system may be composed of chips and may also include chips and other discrete devices.

In a seventeenth aspect, the disclosure provides a chip system. The chip system includes at least one processor and interface, for supporting a network device to realize functions involved in the second aspect, for example, to determine or process at least one of data and information involved in the above-mentioned methods. In a possible design, the chip system further includes a memory. The memory is configured to store a necessary computer program and data of the network device. The chip system may be composed of chips and may also include chips and other discrete devices.

In an eighteenth aspect, the disclosure provides a computer program. When the computer program runs on a computer, the computer is caused to perform the method in the above-mentioned first aspect.

In a nineteenth aspect, the disclosure provides a computer program. When the computer program runs on a computer, the computer is caused to perform the method in the above-mentioned second aspect.

### BRIEF DESCRIPTION OF THE DRAWINGS

In order to describe technical solutions in embodiments of the disclosure or the background art more clearly, accompanying drawings required to be used in embodiments of the disclosure or the background art will be described below.
FIG. 1 is a schematic diagram illustrating an architecture of a communication system according to an embodiment of the disclosure.
FIG. 2 is a flowchart illustrating a method for controlling a smart repeater according to an embodiment of the disclosure.
FIG. 3 is a schematic diagram illustrating Time-Division Duplex (TDD) configuration information according to an embodiment of the disclosure.
FIG. 4 is a flowchart illustrating another method for controlling a smart repeater according to an embodiment of the disclosure.
FIG. 5 is a schematic diagram illustrating still another TDD configuration information according to an embodiment of the disclosure.
FIG. 6 is a flowchart illustrating yet another method for controlling a smart repeater according to an embodiment of the disclosure.
FIG. 7 is a schematic diagram illustrating another TDD configuration information according to an embodiment of the disclosure.
FIG. 8 is a flowchart illustrating yet another method for controlling a smart repeater according to an embodiment of the disclosure.
FIG. 9 is a flowchart illustrating yet another method for controlling a smart repeater according to an embodiment of the disclosure.
FIG. 10 is a flowchart illustrating yet another method for controlling a smart repeater according to an embodiment of the disclosure.
FIG. 11 is a flowchart illustrating yet another method for controlling a smart repeater according to an embodiment of the disclosure.
FIG. 12 is a flowchart illustrating yet another method for controlling a smart repeater according to an embodiment of the disclosure.
FIG. 13 is a flowchart illustrating yet another method for controlling a smart repeater according to an embodiment of the disclosure.
FIG. 14 is a flowchart illustrating yet another method for controlling a smart repeater according to an embodiment of the disclosure.
FIG. 15 is a flowchart illustrating yet another method for controlling a smart repeater according to an embodiment of the disclosure.
FIG. 16 is a flowchart illustrating yet another method for controlling a smart repeater according to an embodiment of the disclosure.
FIG. 17 is a flowchart illustrating yet another method for controlling a smart repeater according to an embodiment of the disclosure.
FIG. 18 is a flowchart illustrating yet another method for controlling a smart repeater according to an embodiment of the disclosure.
FIG. 19 is a flowchart illustrating yet another method for controlling a smart repeater according to an embodiment of the disclosure.
FIG. 20 is a schematic structural diagram illustrating a communication apparatus according to an embodiment of the disclosure.
FIG. 21 is a schematic structural diagram illustrating another communication apparatus according to an embodiment of the disclosure.
FIG. 22 is a schematic structural diagram illustrating a chip according to an embodiment of the disclosure.

### DETAILED DESCRIPTION

For facilitating understanding, firstly, terms involved in the disclosure are introduced.

### Time-division multiplexing (TDM)

The time-division multiplexing (TDM) technology is to intertwine different signals in different time periods, transmit the signals on the same channel, and to extract the signals in all the time periods at a receiving end by using a certain method. By using such a technology, a plurality of paths of signals may be transmitted on the same channel.

### Time-division duplex (TDD)

In a mobile communication system in a TDD mode, different slots of a same frequency channel (i.e., carrier) are used for uplink or downlink communication between a network device and a terminal device, with separating the receiving and transmitting channels by time, a base station transmits a signal to a mobile station in a certain time period and the mobile station transmits a signal to the base station in another time period. The network device and the terminal device have to cooperate with each other to work smoothly.

### Smart repeater

A smart repeater is a network-controlled repeater device, which is expected to become a key technology in Release 18 (Rel. 18) for expanding the coverage of a cell. the smart repeater may be called as 'network-controlled repeater device,' 'repeater device capable of directionally amplifying signals,' 'smart repeater device,' 'network-assisted repeater device,' 'controllable repeater device,' etc., and it may be denoted by a network-controlled repeater. When the smart repeater works in a frequency range 2 (FR2), the smart repeater works in a TDD mode all the time. Different from a multiplexing mode, the TDD means that an uplink signal and a downlink signal are transmitted using different time.

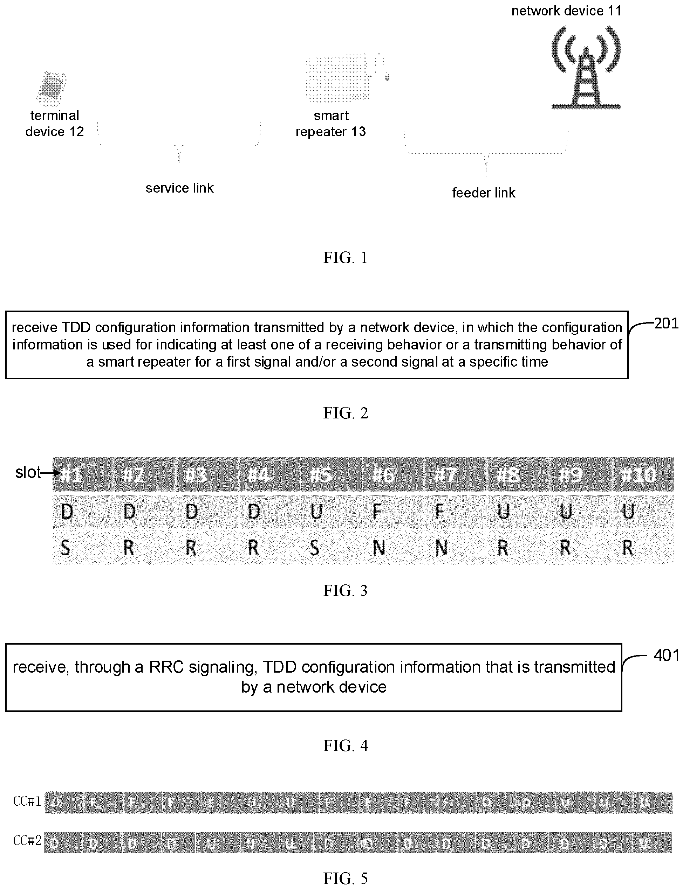

FIG. 1 is a schematic diagram illustrating an architecture of a communication system according to an embodiment of the disclosure. The communication system may include, but is not limited to, one network device and one terminal device, the number and form of devices illustrated in FIG. 1 are only intended to illustrate, rather than to constitute limitations on embodiments of the disclosure. In actual applications, two or more network devices or two or more terminal devices may be included. The communication system illustrated in FIG. 1 including one network device 11, one smart repeater device 13, and one terminal device 12 is an example.

It is noteworthy that the technical solution according to embodiments of the disclosure may be applied to various communication systems, such as a long term evolution (LTE) system, a 5th generation (5G) mobile communication system, a 5G new radio (NR) system, or other future novel mobile communication systems.

The network device 11 in embodiments of the disclosure is an entity for transmitting or receiving signals at a network side. For example, the network device 101 may be an evolved NodeB (eNB), a transmission reception point (TRP), a next generation NodeB (gNB) in an NR system, a base station in other future mobile communication systems or an access node in a wireless fidelity (WiFi) system, etc. In embodiments of the disclosure, a specific technology and a specific device form that are adopted by the network device are not limited. The network device according to embodiments of the disclosure may be composed of a central unit (CU) and distributed units (DUs). The CU may also be referred to as a control unit. By adopting the CU-DU structure, protocol layers of the network device, such as a base station, may be split, such that functions of parts of the protocol layers are centrally controlled by the CU, and functions of parts or all of the remaining protocol layers are distributed in the DUs which are centrally controlled by the CU.

The terminal device 12 according to embodiments of the disclosure is an entity, such as a mobile phone, for receiving or transmitting signals. The terminal device may also be referred to as a terminal, user equipment (UE), a mobile station (MS), a mobile terminal (MT), etc. The terminal device may be a vehicle with a communication function, a smart vehicle, a mobile phone, a wearable device, a tablet computer (Pad), a computer with a radio transceiver function, a virtual reality (VR) terminal device, an augmented reality (AR) terminal device, a radio terminal device in industrial control, a radio terminal device in self-driving, a radio terminal device in remote medical surgery, a radio terminal device in a smart grid, a radio terminal device in transportation safety, a radio terminal device in a smart city, a radio terminal device in a smart home, etc. In embodiments of the disclosure, a specific technology and a specific device form that are adopted by the terminal device in embodiments of the disclosure are not limited.

It is understandable that the communication system described in embodiments of the disclosure is intended to describe the technical solution according to embodiments of the disclosure more clearly, rather than to constitute a limitation on the technical solution according to embodiments of the disclosure. It may be known by those of ordinary skill in the art that, with the evolution of a system architecture and the emergence of new service scenarios, the technical solution according to embodiments of the disclosure is equally applicable to similar technical problems.

Generally, in a smart repeater communication scenario, the smart repeater may be used for forwarding an uplink signal transmitted by the terminal device to the network device and a downlink signal transmitted by the network device to the terminal device, and may further be used for transmitting a self-generated uplink signal (such as a feedback signal for responding to a control signal transmitted by the network device) to the network device, or receiving a downlink signal transmitted by the network device to the smart repeater. When the above-mentioned four signals are multiplexed together by using a TDM technology, it is necessary to design an uplink or downlink control method to indicate at least one of a receiving behavior or a transmitting behavior for each signal at a specific time so as to ensure the correctness of receiving or transmitting information. A method and an apparatus for controlling a smart repeater according to the disclosure will be introduced in detail below in conjunction with the accompanying drawings.

FIG. 2 is a flowchart illustrating a method for controlling a smart repeater according to an embodiment of the disclosure. The method is performed by a smart repeater. As illustrated in FIG. 2, the method may include, but is not limited to, the following.

At step 201, time-division duplex (TDD) configuration information transmitted by a network device is received, in which the configuration information is used for indicating at least one of a receiving behavior or a transmitting behavior of the smart repeater for a first signal and/or a second signal at a specific time.

The first signal and the second signal may be multiplexed together by TDM or frequency division multiplexing (FDM) or space division multiplexing (SDM), which is not limited in the disclosure. The first signal may be indicated as an uplink or downlink signal that needs to be forwarded by the smart repeater. For example, the first signal may be at least one of: a forwarded uplink signal transmitted by the terminal device, or a forwarded downlink signal transmitted by the network device. The second signal may be indicated as an uplink or downlink signal used for direct communication between the smart repeater and the network device. For example, the second signal may be at least one of: an uplink signal, transmitted by the smart repeater to the network device, used for the direct communication with the network device, or a downlink signal, transmitted by the network device to the smart repeater, used for the direct communication with the smart repeater.

In some examples, the TDD configuration information received by the smart repeater indicates that a behavior thereof is downlink. Or, the TDD configuration information received by the smart repeater indicates that the behavior thereof is uplink. Or, the TDD configuration information received by the smart repeater indicates that behaviors at certain specific times are downlink and/or behaviors at certain specific times are uplink and/or behaviors at certain specific times are uncertain, etc., which are not limited in the disclosure. The indication that the behavior is downlink means indicating that a behavior of the smart repeater is receiving a downlink signal. The indication that the behavior thereof is uplink means indicating that a behavior of the smart repeater is transmitting an uplink signal.

Correspondingly, when the smart repeater receives the indication that the behavior is downlink, for the first signal, a behavior of forwarding a downlink signal from a base station may be performed at a corresponding time; and for the second signal, behaviors of receiving information from the base station and performing subsequent indication for demodulation and/or decoding are performed at a corresponding time.

Or, when the smart repeater receives the indication that the behavior is uplink, for the first signal, the smart repeater performs a behavior of forwarding an uplink signal from the terminal device at a corresponding time; and for the second signal, the smart repeater performs a behavior of transmitting, to the network device at a corresponding time, a self-generated uplink signal that is at least demodulated and/or decoded.

Generally, after establishing a connection with the network device, the smart repeater may receive the TDD configuration information transmitted by the network device, in which the TDD configuration information includes information used for indicating the behavior of the smart repeater for the first signal and/or the second signal at the specific time. For example, in the TDD configuration information, D denotes downlink, U denotes uplink, F denotes free (which may be either uplink or downlink). That is, the TDD information is used for both the first signal and the second signal. For example, the TDD configuration information may further include TDM pattern information. For example, R denotes forwarded information (i.e., the first signal), S denotes self-controlled information (i.e., the second signal), and N denotes that it is uncertain whether it is R or S.

For example, FIG. 3 is a schematic diagram illustrating TDD configuration information, transmitted by the network device, including a TDM pattern. The smart repeater may receive the second signal in slot#1 based on this TDD configuration information (i.e. the smart repeater receives the downlink signal transmitted by the network device), receive the first signal in the second to fourth slots (i.e., forward the downlink signal transmitted by the network device), transmit the second signal in the fifth slot (i.e., the uplink signal self-generated by the smart repeater), upload the first signal in the eighth to ninth slots (forward the uplink signal from the terminal device), and cannot determine at least one of a corresponding uplink situation or a corresponding downlink situation in the sixth to seventh slots.

In the disclosure, the smart repeater may forward an uplink signal transmitted by the terminal device to the network device, forward a downlink signal transmitted by the network device to the terminal device, transmit a self-generated uplink signal (such as a feedback signal for responding to a signal transmitted by the network device) to the network device, or receive a downlink signal transmitted by the network device to the smart repeater (such as a control signal transmitted by the network device to the smart repeater).

In the disclosure, the network device may configure, in the TDD configuration information, the information for indicating at least one of the receiving behavior or the transmitting behavior of the smart repeater for the first signal and/or the second signal at the specific time and transmit the TDD configuration information to the smart repeater. In this way, the smart repeater may determine, based on the TDD configuration information, to perform uplink transmission or downlink transmission at the specific time.

In some examples, when the configuration information does not indicate any uplink or downlink situation of a signal at a specific time, it may be determined that the specific time corresponds to the uplink signal. Or, when the configuration information does not indicate any uplink or downlink situation of a signal at a specific time, it is determined that the specific time corresponds to the downlink signal. For example, in the TDD configuration information illustrated in FIG. 3, since the slot#6 and the slot#7 are free, the smart repeater may consider that the slot#6 and the slot#7 correspond to the downlink signal, or may consider that the slot#6 and the slot#7 correspond to the uplink signal.

It is noteworthy that, if the slot#6 corresponds to R in a TDM pattern part in the TDD configuration information illustrated in FIG. 3, then the smart repeater may consider that the slot#6 corresponds to a forwarded downlink signal or a forwarded uplink signal. Correspondingly, if the slot#6 corresponds to S in the TDM pattern part, the smart repeater may consider that the slot#6 corresponds to a self-controlled downlink signal or a self-controlled uplink signal.

In addition, it is also possible that the TDD configuration information does not include the TDM pattern, and thus the smart repeater may receive, through other information, a TDM pattern configured by the network device so as to determine whether the uplink or downlink signal is the first signal or the second signal, which is not limited in the disclosure.

In the disclosure, the smart repeater may receive the TDD configuration information, transmitted by the network device, used for indicating at least one of the receiving behavior or the transmitting behavior of the smart repeater for the first signal and/or the second signal at the specific time. In this way, by means of the TDD configuration information, at least one of the receiving behavior or the transmitting behavior for each signal at the specific time may be determined, such that the smart repeater may control each uplink or downlink signal, thereby further ensuring the correctness of receiving or transmitting information.

FIG. 4 is a schematic diagram illustrating a method for controlling a smart repeater according to an embodiment of the disclosure. The method is performed by a smart repeater. As illustrated in FIG. 4, the method may include, but is not limited to, the following.

At step 401, TDD configuration information transmitted by a network device is received through a Radio Resource Control (RRC) signaling.

The TDD configuration information is used for indicating at least one of a receiving behavior or a transmitting behavior of the smart repeater for a first signal and/or a second signal at a specific time.

In addition, specific explanation for the first signal and the second signal may refer to detailed description in any embodiment of the disclosure, which is not repeated herein.

In the disclosure, the network device may configure the TDD configuration information in the RRC signaling. In this way, after receiving the RRC signaling transmitted by the network device, the smart repeater may determine the TDD configuration information, and then determine at least one of the receiving behavior or the transmitting behavior for the first signal and/or the second signal at a position of the specific time based on the TDD configuration information.

In some examples, the smart repeater may further receive, through a semi-static RRC signaling, the TDD configuration information transmitted by the network device.

In some examples, the first signal and the second signal may correspond to different TDD configuration information; or the first signal and the second signal may correspond to the same TDD configuration information.

In some examples, the RRC signaling may further include a first signal identifier and/or a second signal identifier corresponding to each piece of TDD configuration information, for indicating a correspondence between the first signal or the second signal and the TDD configuration information. The identifier may be any information capable of uniquely determining the signal, such as carrier information used for transmitting a corresponding signal, which is not limited in the disclosure.

In the disclosure, after establishing a connection with the network device, the smart repeater may receive the RRC signaling, transmitted by the network device, including the TDD configuration information. The TDD configuration information may include a corresponding first signal identifier or a corresponding second signal identifier. The configuration information may further include the TDD configuration information. For example, D denotes downlink, U denotes uplink, and F denotes free (which may be either uplink or downlink). The TDD configuration information is applicable to the first signal and the second signal respectively.

As illustrated in FIG. 5, the TDD configuration information includes carrier frequency information for the first signal and the second signal. CC#2 is used for forwarding (i.e., receiving or transmitting the first signal), and CC#1 is used for receiving or transmitting a self-signal of the smart repeater (i.e., receiving or transmitting the second signal). If a TDD configuration corresponding to the second signal is DFFFFUUFFFFDDUUU, then the smart repeater receives and demodulates the second signal, such as a physical downlink control channel (PDCCH) signal, in the first slot, waits for a further indication from a network at positions of the second to fifth slots, and transmits the second signal, such as an acknowledge (ACK)/not acknowledge (NACK) signal, at positions of sixth to seventh slots. If a TDD configuration corresponding to the first signal is DDDDUUUDDDDDDDDU, then the smart repeater may receive, at time positions of first slot to fourth slots, the uplink signal transmitted by the network device, and transmit, at time positions of fifth slot to seventh slot, the uplink signal transmitted by the terminal device.

In the disclosure, the smart repeater may receive, through the RRC signaling, the TDD configuration information that is transmitted by the network device. In this way, by means of the TDD configuration information, at least one of the receiving behavior or the transmitting behavior for each signal at the specific time may be determined, such that control on each uplink or downlink signal by the smart repeater is realized, thereby further ensuring the correctness of receiving or transmitting information.

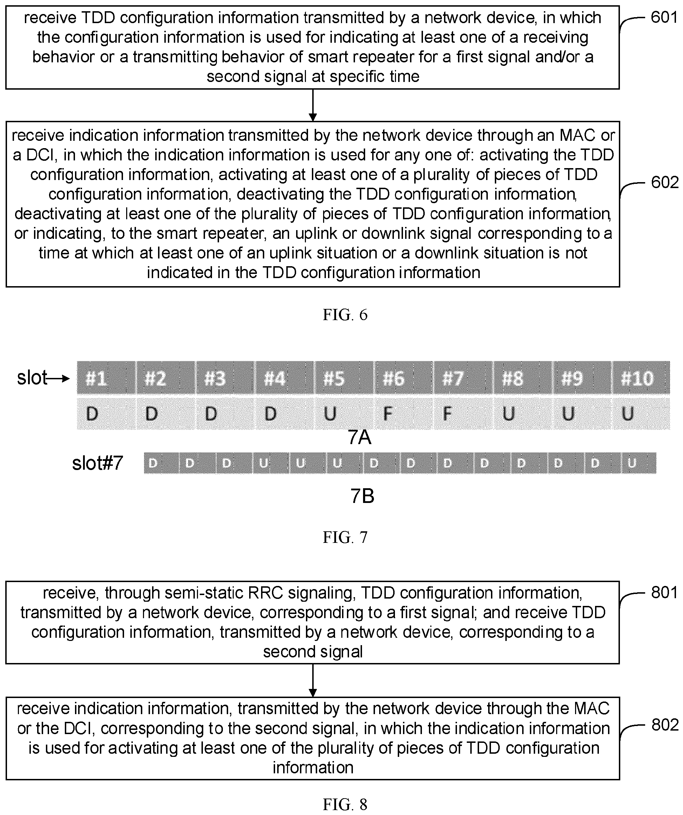

FIG. 6 is a flowchart illustrating a method for controlling a smart repeater according to an embodiment of the disclosure. The method is performed by a smart repeater. As illustrated in FIG. 6, the method may include, but is not limited to, the following.

At step 601, TDD configuration information that is transmitted by a network device is received. The configuration information is used for indicating at least one of a receiving behavior or a transmitting behavior of the smart repeater for a first signal and/or a second signal at a specific time.

In the disclosure, the implementation process of the step 601 may refer to detailed description in any embodiment of the disclosure, which is not repeated herein.

At step 602, indication information transmitted by the network device through a media access control (MAC) or a downlink control information (DCI) is received. The indication information is used for realizing any one of: activating the TDD configuration information, activating at least one of multiple pieces of TDD configuration information, deactivating the TDD configuration information, deactivating at least one of a plurality of pieces of TDD configuration information, or indicating, to the smart repeater, an uplink or downlink signal corresponding to a time at which at least one of an uplink situation or a downlink situation is not indicated in the TDD configuration information.

In the disclosure, after transmitting the TDD configuration information to the smart repeater, the network device may further activate the TDD configuration information based on the indication information transmitted through MAC or DCI. The indication information may include identifier information of TDD configuration(s) to be activated. In this way, the smart repeater may determine activated TDD configuration(s) based on identifier(s) of the TDD configuration(s). The identifier of the TDD configuration may be any information capable of uniquely determining the TDD configuration, such as a serial number of the TDD configuration.

Or, after assigning multiple pieces of TDD configuration information to the smart repeater, the network device may further activate at least one of the multiple pieces of TDD configuration information based on the indication information transmitted through MAC or DCI.

Or, after activating the TDD configuration information based on the indication information transmitted through MAC or DCI, the network device may further deactivate the TDD configuration information based on the indication information transmitted through MAC or DCI. There may be one or more pieces of deactivated TDD configuration information.

In the disclosure, the network device may further indicate, to the smart repeater based on the indication information transmitted through MAC or DCI, an uplink or downlink signal corresponding to the time at which at least one of the uplink situation or the downlink situation is not indicated in the TDD configuration information. For example, as illustrated in FIG. 4, at least one of the uplink situation or the downlink situation at a position of the sixth slot is not indicated in the TDD configuration. In this case, at least one of the uplink situation or the downlink situation at the position of the sixth slot may be indicated through an MAC CE and/or a DCI command.

In some examples, the above mentioned "uplink or downlink signal corresponding to the time at which at least one of the uplink situation or the downlink situation is not indicated in the TDD configuration information" indicated to the smart repeater may be the uplink or downlink signal corresponding to a position of one slot or TDD configurations corresponding to positions of a plurality of consecutive symbols in one slot, which is not limited in the disclosure.

As illustrated in FIG. 7, FIG. 7A is a schematic diagram illustrating the uplink or downlink signal, indicated through the MAC or DCI, corresponding to the time at which at least one of the uplink situation or the downlink situation is not indicated in the TDD configuration information. In FIG. 7, D\U\F denotes specific contents of the TDD configuration, where D denotes receiving a downlink signal, U denotes transmitting an uplink signal, F denotes that at least one of the uplink situation or the downlink situation is uncertain. The TDD configuration transmitted by the network device to the smart repeater is DDDDUFFUUU, in which at least one of the uplink situation or the downlink situation at the time position of the seventh slot is uncertain. In this case, the TDD configuration information corresponding to the plurality of consecutive symbols at the time position of the seventh slot may be further indicated through MAC or DCI, as illustrated in FIG. 7B.

In the disclosure, after receiving the TDD configuration information, transmitted by the network device, used for indicating at least one of the receiving behavior or the transmitting behavior of the smart repeater for the first signal and/or the second signal at the specific time, the smart repeater may further receive the indication information transmitted by the network device through MAC or DCI to further set the TDD configuration. In this way, by means of the TDD configuration information, at least one of the receiving behavior or the transmitting behavior for each signal at the specific time may be determined, such that control on each uplink or downlink signal by the smart repeater is realized, thereby further ensuring the correctness of receiving or transmitting information.

In the disclosure, the network device may assign one piece of TDD configuration information to the first signal and assign multiple pieces of TDD configuration information to the second signal. Therefore, the network device may indicate the TDD configuration information corresponding to the first signal only through the RRC signaling, indicate the multiple pieces of TDD configuration information corresponding to the second signal through the RRC signaling, and indicate the TDD configuration information to be used by the second signal through the MAC or the DCI.

FIG. 8 is a flowchart illustrating a method for controlling a smart repeater according to an embodiment of the disclosure. The method is performed by a smart repeater. As illustrated in FIG. 8, the method may include, but is not limited to, the following.

At step 801, TDD configuration information, transmitted by a network device, corresponding to a first signal and TDD configuration information, transmitted by a network device, corresponding to a second signal are received through one or more semi-static RRC signaling.

In an example, the TDD configuration information corresponding to the first signal transmitted by the network device and the multiple pieces of TDD configuration information corresponding to the second signal transmitted by the network device may be respectively received through two semi-static RRC signaling.

At step 802, indication information, transmitted by the network device through MAC or DCI, corresponding to the second signal is received. The indication information is used for activating at least one of the multiple pieces of TDD configuration information.

In the disclosure, specific implementation processes of the step 801 to the step 802 may refer to detailed description in any embodiment of the disclosure, which are not repeated herein.

In the disclosure, after receiving, by the smart repeater through the semi-static RRC signaling, the TDD configuration information, transmitted by the network device, corresponding to the first signal and the TDD configuration information, transmitted by the network device, corresponding to the second signal, the smart repeater may receive indication information, transmitted by the network device through MAC or DCI, used for activating at least one of the multiple pieces of TDD configuration information corresponding to the second signal. In this way, by means of the TDD configuration information, at least one of the receiving behavior or the transmitting behavior of each signal at the specific time may be determined, such that control on each uplink or downlink signal by the smart repeater is realized, thereby further ensuring the correctness of receiving or transmitting information.

In the disclosure, the TDD configuration information corresponding to the first signal does not include the time at which at least one of the uplink situation or the downlink situation is not indicated, and the TDD configuration information corresponding to the second signal may include the time at which the uplink or downlink is not indicated. Therefore, the network device may indicate the TDD configuration information corresponding to the first signal only through the RRC signaling, indicate the multiple pieces of TDD configuration information corresponding to the second signal through the RRC signaling and indicate, through the MAC or DCI, the uplink or downlink signal corresponding to the time at which at least one of the uplink situation or the downlink situation is not indicated in the TDD configuration information corresponding to the second signal.

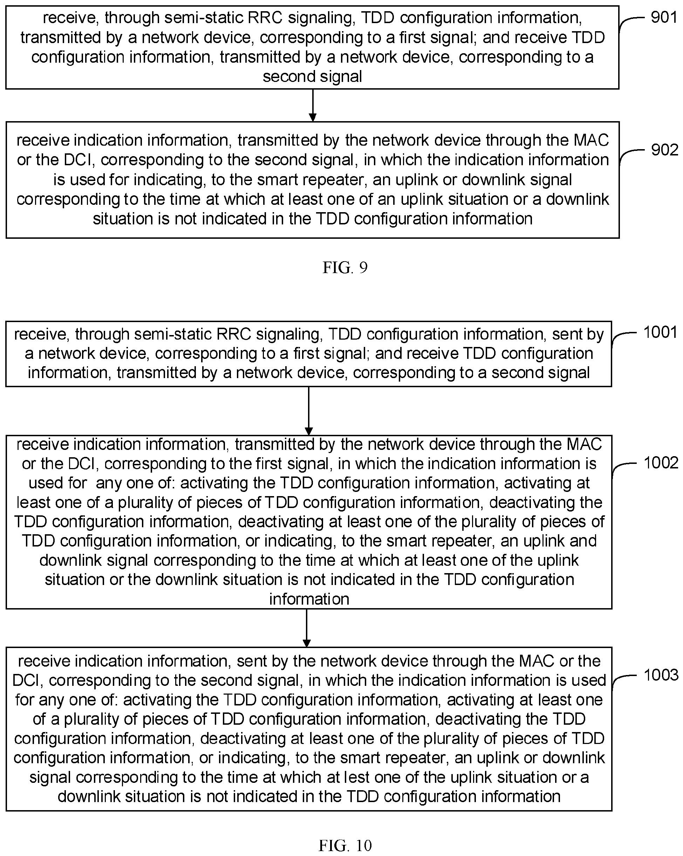

FIG. 9 is a flowchart illustrating a method for controlling a smart repeater according to an embodiment of the disclosure. The method is performed by a smart repeater. As illustrated in FIG. 9, the method may include, but is not limited to, the following.

At step 901, the TDD configuration information, transmitted by a network device, corresponding to a first signal and the TDD configuration information, transmitted by the network device, corresponding to a second signal are received through one or more semi-static RRC signaling.

At step 902, indication information, transmitted by the network device through the MAC or the DCI, corresponding to the second signal is received. The indication information is used for indicating, to the smart repeater, an uplink or downlink signal corresponding to a time at which at least one of the uplink situation or the downlink situation is not indicated in the TDD configuration information.

In the disclosure, specific implementation processes of the step 901 to the step 902 may refer to detailed description in any embodiment of the disclosure, which are not repeated herein.

In the disclosure, after receiving, through the semi-static RRC signaling by the smart repeater, the TDD configuration information, transmitted by the network device, corresponding to the first signal and the TDD configuration information, transmitted by the network device, corresponding to the second signal, the smart repeater may receive the indication information corresponding to the second signal, transmitted by the network device through MAC or DCI, used for indicating, to the smart repeater, the uplink or downlink signal corresponding to the time at which at least one of the uplink situation or the downlink situation is not indicated in the TDD configuration information. In this way, by means of the TDD configuration information, at least one of the receiving behavior or the transmitting behavior for each signal at the specific time may be determined, such that control on each uplink or downlink signal by the smart repeater is realized, thereby further ensuring the correctness of receiving or transmitting information.

In the disclosure, the first signal and the second signal may correspond to different TDD configuration information. When both the first signal and the second signal require the further indication of TDD configuration related information, for example, both the first signal and the second signal need the further indication of the uplink or downlink signal corresponding to the time at which at least one of the uplink situation or the downlink situation is not indicated in the TDD configuration information, the network device may indicate, through the RRC signaling, the TDD configuration information corresponding to the first signal and TDD configuration information corresponding to the second signal, and further indicate, through MAC or DCI, the TDD configuration related information corresponding to the first signal and the TDD configuration related information corresponding to the second signal respectively.

FIG. 10 is a flowchart illustrating a method for controlling a smart repeater according to an embodiment of the disclosure. The method is performed by a smart repeater. As illustrated in FIG. 10, the method may include, but is not limited to, the following.

At step 1001, TDD configuration information, transmitted by a network device, corresponding to a first signal and TDD configuration information, transmitted by a network device, corresponding to a second signal are received through one or more semi-static RRC signaling.

At step 1002, indication information, transmitted by the network device through the MAC or the DCI, corresponding to the first signal is received. The indication information is used for realizing any one of: activating the TDD configuration information, activating at least one of multiple pieces of TDD configuration information, deactivating the TDD configuration information, deactivating at least one of the multiple pieces of TDD configuration information, or indicating, to the smart repeater, an uplink or downlink signal corresponding to the time at which at least one of the uplink situation or the downlink situation is not indicated in the TDD configuration information.

At step 1003, indication information, transmitted by the network device through the MAC or the DCI, corresponding to the second signal is received. The indication information is used for realizing any one of: activating the TDD configuration information, activating at least one of multiple pieces of TDD configuration information, deactivating the TDD configuration information, deactivating at least one of the multiple pieces of TDD configuration information, or indicating, to the smart repeater, an uplink or downlink signal corresponding to the time at which at least one of the uplink situation or the downlink situation is not indicated in the TDD configuration information.

In the disclosure, specific implementation processes of the step 1001 to the step 1003 may refer to detailed description in any embodiment of the disclosure, which are not repeated herein.

In the disclosure, after receiving, through the semi-static RRC signaling by the smart repeater, the TDD configuration information, transmitted by the network device, corresponding to the first signal and the TDD configuration information, transmitted by the network device, corresponding to the second signal, the smart repeater may receive the indication information, transmitted by the network device through the MAC or the DCI, corresponding to the first signal and the indication information, transmitted by the network device through the MAC or the DCI, corresponding to the second signal. In this way, by means of the TDD configuration information, at least one of the receiving behavior or the transmitting behavior for each signal at the specific time may be determined, such that control on each uplink or downlink signal by the smart repeater is realized, thereby further ensuring the correctness of receiving or transmitting information.

In the disclosure, the first signal and the second signal may correspond to the same TDD configuration information, but TDD configuration related information of the first signal and the second signal that need to be further indicated may be different. For example, the uplink or downlink signal corresponding to the time at which at least one of the uplink situation or the downlink situation is not indicated in the TDD configuration information is different for the first signal and the second signal, and the network device may indicate, through the RRC signaling, the TDD configuration information corresponding to the first signal and the TDD configuration information corresponding to the second signal, and further indicate, through the MAC or the DCI, the TDD configuration related information corresponding to the first signal and the TDD configuration related information corresponding to the second signal respectively.

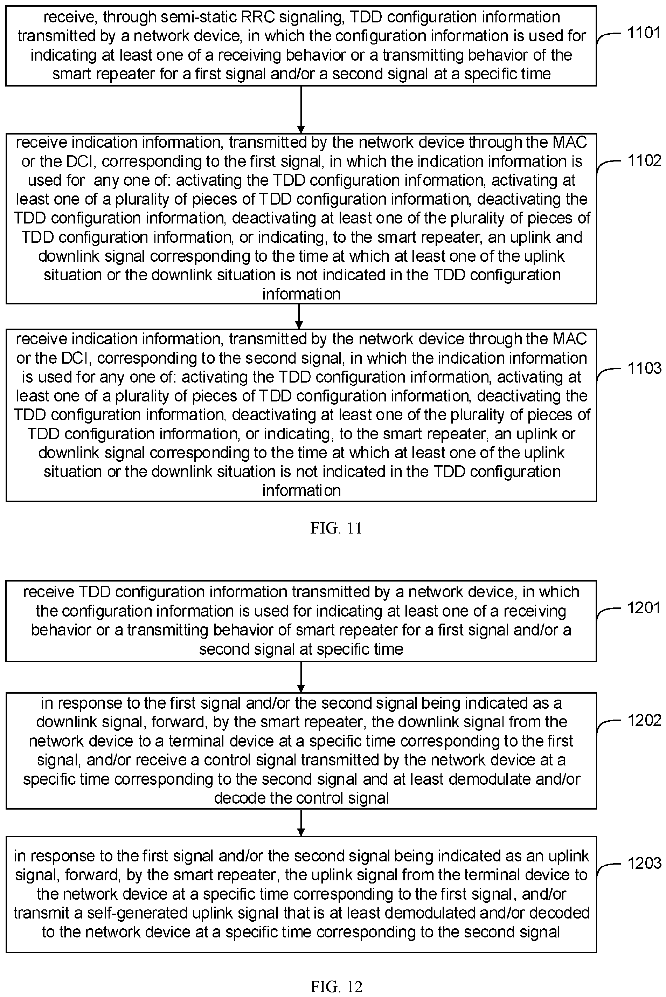

FIG.11 is a flowchart illustrating a method for controlling a smart repeater according to an embodiment of the disclosure. The method is performed by a smart repeater. As illustrated in FIG. 11, the method may include, but is not limited to, the following.

At step 1101, TDD configuration information that is transmitted by a network device is received through semi-static RRC signaling(s). The configuration information is used for indicating at least one of a receiving behavior or a transmitting behavior of the smart repeater for a first signal and/or a second signal at a specific time.

At step 1102, indication information, transmitted by the network device through the MAC or the DCI, corresponding to the first signal is received. The indication information is used for realizing any one of: activating the TDD configuration information, activating at least one of multiple pieces of TDD configuration information, deactivating the TDD configuration information, deactivating at least one of multiple pieces of TDD configuration information, or indicating, to the smart repeater, an uplink or downlink signal corresponding to the time at which at least one of the uplink situation or the downlink situation is not indicated in the TDD configuration information.

At step 1103, indication information, transmitted by the network device through the MAC or the DCI, corresponding to the second signal is received. The indication information is used for realizing any one of: activating the TDD configuration information, activating at least one of multiple pieces of TDD configuration information, deactivating the TDD configuration information, deactivating at least one of a plurality of pieces of TDD configuration information, or indicating, to the smart repeater, an uplink or downlink signal corresponding to the time at which at least one of the uplink situation or the downlink situation is not indicated in the TDD configuration information.

In the disclosure, specific implementation processes of the step 1101 to the step 1103 may refer to detailed description in any embodiment of the disclosure, which are not repeated herein.

In the disclosure, the smart repeater may receive, through the semi-static RRC signaling(s), the TDD configuration information, transmitted by the network device, used for indicating at least one of the receiving behavior or the transmitting behavior of the smart repeater for the first signal and/or the second signal at the specific time, may receive the indication information, transmitted by the network device through the MAC or the DCI, corresponding to the first signal, and receive the indication information, transmitted by the network device through MAC or DCI, corresponding to the second signal. In this way, by means of the TDD configuration information, at least one of the receiving behavior or the transmitting behavior for each signal at the specific time may be determined, such that control on each uplink or downlink signal by the smart repeater is realized, thereby further ensuring the correctness of receiving or transmitting information.

FIG. 12 is a flowchart illustrating a method for controlling a smart repeater according to an embodiment of the disclosure. The method is performed by a smart repeater. As illustrated in FIG. 12, the method may include, but is not limited to, the following.

At step 1201, TDD configuration information that is transmitted by a network device is received. The configuration information is used for indicating at least one of a receiving behavior or a transmitting behavior of the smart repeater for a first signal and/or a second signal at a specific time.

In the disclosure, a specific implementation process of the step 1201 may refer to detailed description in any embodiment of the disclosure, which is not repeated herein.

At step 1202, in response to the first signal and/or the second signal being indicated as a downlink signal, the smart repeater forwards the downlink signal from the network device to a terminal device at a specific time corresponding to the first signal, and/or receives a control signal transmitted by the network device at a specific time corresponding to the second signal and at least demodulate and/or decode the control signal.

In the disclosure, when determining, based on the TDD configuration information, that the first signal and/or the second signal is indicated as the downlink signal, the smart repeater may forward the downlink signal from the network device to the terminal device at the specific time corresponding to the first signal, and may receive the signal transmitted by the network device to the smart repeater at the specific time corresponding to the second signal.

At step 1203, in response to the first signal and/or the second signal being indicated as an uplink signal, the smart repeater forwards the uplink signal from the terminal device to the network device at a specific time corresponding to the first signal, and/or transmits a self-generated uplink signal that is at least demodulated and/or decoded to the network device at a specific time corresponding to the second signal.

In some examples, in the TDD configuration information, not only the behavior of the downlink first and/or second signal in the specific time may be indicated to the smart repeater, but also the behavior of the uplink first and/or second signal in the specific time may be indicated to the smart repeater, such that the smart repeater may forward the first signal to the terminal device at the specific time corresponding to the downlink first signal, receive the second signal transmitted by the network device and demodulate and/or decode the second signal at the specific time corresponding to the downlink second signal, forward the first signal to the network device at the specific time corresponding to the uplink first signal, and transmit the self-generated and demodulated and/or decoded uplink signal to the network device at the specific time corresponding to the uplink second signal, for example, transmit a generated response signal to the network device, etc., which is not limited in the disclosure.

In the disclosure, the smart repeater performs a corresponding forwarding operation on the first signal at the specific time corresponding to the first signal and transmits the self-generated signal that is at least demodulated and/or decoded at the specific time corresponding to the second signal based on at least one of the uplink situation or the downlink situation corresponding to the first signal and/or the second signal in the TDD configuration information, such that the accurate processing of the first signal and/or the second signal by the TDD smart repeater is realized and reliable control on the TDD smart repeater is realized.

In the disclosure, after the smart repeater receives the TDD configuration information, transmitted by the network device, used for indicating at least one of the receiving behavior or the transmitting behavior of the smart repeater for the first signal and/or the second signal at the specific time, if a corresponding operation is a downlink operation at the specific time, then the smart repeater forwards the downlink signal from the network device to the terminal device at the specific time corresponding to the first signal, and/or receives the control signal transmitted by the network device and at least performs the demodulation and/or decoding on the control signal at the specific time corresponding to the second signal; and if the corresponding operation is an uplink operation at the specific time, the smart repeater forwards the uplink signal of the terminal device to the network device at the specific time corresponding to the first signal, and/or transmits the self-generated uplink signal that is at least demodulated and/or decoded to the network device at the specific time corresponding to the second signal. In this way, by means of TDD configuration information, at least one of the receiving behavior or the transmitting behavior for each signal at a specific time may be determined, such that control on each uplink or downlink signal by the smart repeater is realized, thereby further ensuring the correctness of receiving or transmitting information.

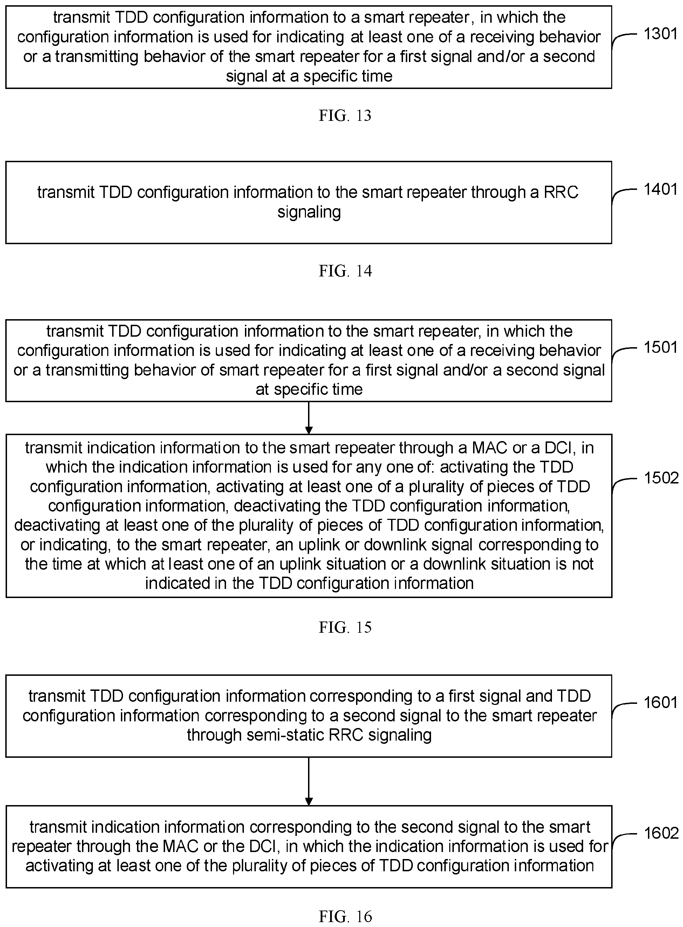

FIG. 13 is a flowchart illustrating a method for controlling a smart repeater according to an embodiment of the disclosure. The method is performed by a network device. As illustrated in FIG. 13, the method may include, but is not limited to, the following.

At step 1301, TDD configuration information is transmitted to a smart repeater. The configuration information is used for indicating at least one of a receiving behavior or a transmitting behavior of the smart repeater for a first signal and/or a second signal at a specific time.

The first signal and the second signal may be multiplexed together by TDM or frequency division multiplexing (FDM) or space division multiplexing (SDM), which is not limited in the disclosure. The first signal may be indicated as an uplink or downlink signal that needs to be forwarded by the smart repeater. For example, the first signal may be at least one of: a forwarded uplink signal transmitted by the terminal device, or a forwarded downlink signal transmitted by the network device. The second signal may be indicated as an uplink or downlink signal used for direct communication between the smart repeater and the network device. For example, the second signal may be at least one of: an uplink signal, transmitted to the network device by the smart repeater, used for the direct communication with the network device, or a downlink signal, transmitted to the smart repeater by the network device, used for the direct communication with the smart repeater.

In some examples, the TDD configuration information received by the smart repeater indicates that a behavior thereof is downlink. Or, the TDD configuration information received by the smart repeater indicates that a behavior thereof is uplink. Or, the TDD configuration information received by the smart repeater indicates that behaviors at certain specific times are downlink and/or behaviors at certain specific times are uplink and/or behaviors at certain specific times are uncertain, etc., which are not limited in the disclosure. The indication that the behavior thereof is downlink means indicating that the behavior of the smart repeater is receiving a downlink signal, and the indication that the behavior thereof is uplink means indicating that a behavior of the smart repeater is transmitting an uplink signal.

Correspondingly, when the smart repeater receives the indication that the behavior is downlink, for the first signal, a behavior of forwarding a downlink signal from a base station may be performed at a corresponding time; and for the second signal, behaviors of receiving information of the base station and performing an subsequent indication for demodulation and/or decoding are performed at a corresponding time.

Or, when the smart repeater receives the indication that the behavior is uplink, for the first signal, the smart repeater performs a behavior of forwarding an uplink signal from the terminal device at a corresponding time; and for the second signal, the smart repeater performs a behavior of transmitting a self-generated uplink signal that is at least demodulated and/or decoded to the network device at a corresponding time.

Generally, after establishing a connection with the smart repeater, the network device may transmit the TDD configuration information to the smart repeater. The TDD configuration information includes information used for indicating the behavior of the smart repeater for the first signal and/or the second signal at the specific time. For example, in the TDD configuration information, D denotes downlink, U denotes uplink, F denotes free (which may be either uplink or downlink). That is, the TDD information may be commonly used for both the first signal and the second signal. In some examples, the TDD configuration information may further include TDM pattern information. For example, R denotes forwarding information (i.e., the first signal), S denotes self-controlled information (i.e., the second signal), and N denotes that it is uncertain whether it is R or S.

For example, FIG.3 is a schematic diagram illustrating TDD configuration information, transmitted by the network device, including a TDM pattern. As illustrated in FIG. 3, based on this TDD configuration information, the smart repeater may receive the second signal in slot#1(i.e. receive the downlink signal transmitted by the network device), receive the first signal in the second to fourth slots (i.e. forward the downlink signal transmitted by the network device), transmit the second signal in the fifth slot (i.e., the uplink signal self-generated by the smart repeater), upload the first signal in the eighth to ninth slots, (i.e. forward the uplink signal transmitted by the terminal device), and cannot determine at least one of a corresponding uplink situation or a corresponding downlink situations in the sixth to seventh slots.

In the disclosure, the smart repeater may forward an uplink signal transmitted by the terminal device to the network device, forward a downlink signal transmitted by the network device to the terminal device, transmit a self-generated uplink signal (such as a feedback signal for responding to a signal transmitted by the network device) to the network device, or receive a downlink signal (such as a control signal transmitted by the network device to the smart repeater) transmitted by the network device to the smart repeater.

In the disclosure, the network device may configure the information used for indicating at least one of the receiving behavior or the transmitting behavior of the smart repeater for the first signal and/or the second signal at the specific time in the TDD configuration information and transmit the TDD configuration information to the smart repeater. In this way, the smart repeater may determine, based on the TDD configuration information, whether to perform uplink transmission or downlink transmission at the specific time.

In some examples, when at least one of the uplink situation or the downlink situation of a signal at a specific time is not indicated in the configuration information, it may be determined that the specific time corresponds to an uplink signal. Or, when at least one of the uplink situation or the downlink situation of a signal at a specific time is not indicated in the configuration information, it may be determined that the specific time corresponds to a downlink signal. For example, in the TDD configuration information illustrated in FIG. 3, since the slot#6 and the slot#7 are free, the smart repeater may consider that the slot#6 and the slot#7 correspond to the downlink signal or may consider that the slot#6 and the slot#7 correspond to the uplink signal.

It is noteworthy that, if the slot#6 corresponds to R in a TDM pattern part in the TDD configuration information illustrated in FIG. 3, the smart repeater may consider that the slot#6 corresponds to a downlink forwarded signal or an uplink forwarded signal. Correspondingly, if the slot#6 corresponds to S in the TDM pattern part, the smart repeater may consider that slot#6 corresponds to a downlink self-controlled signal or an uplink self-controlled signal.

In addition, it is also possible that the TDD configuration information does not include the TDM pattern, and thus the smart repeater may receive, through other information, a TDM pattern configured by the network device so as to determine whether the uplink or downlink signal is the first signal or the second signal, which is not limited in the disclosure.

In the disclosure, the network device may transmit, to the smart repeater, the TDD configuration information used for indicating at least one of the receiving behavior or the transmitting behavior of the smart repeater for the first signal and/or the second signal at the specific time. In this way, by means of TDD configuration information, at least one of the receiving behavior or the transmitting behavior for each signal at a specific time may be determined, such that control on each uplink or downlink signal by the smart repeater is realized, thereby further ensuring the correctness of receiving or transmitting information.

FIG. 14 is a flowchart illustrating a method for controlling a smart repeater according to an embodiment of the disclosure. The method is performed by a network device. As illustrated in FIG. 14, the method may include, but is not limited to, the following.

At step 1401, TDD configuration information is transmitted to the smart repeater through a Radio Resource Control (RRC) signaling.

The TDD configuration information is used for indicating at least one of a receiving behavior or a transmitting behavior of the smart repeater for a first signal and/or a second signal at a specific time.

In addition, specific explanation for the first signal and the second signal may refer to detailed description in any embodiment of the disclosure, which is not repeated herein.

In the disclosure, the network device may configure the TDD configuration information in the RRC signaling. In this way, after receiving the RRC signaling transmitted by the network device, the smart repeater may determine the TDD configuration information, and then determine at least one of the receiving behavior or the transmitting behavior for the first signal and/or the second signal at a position of the specific time based on the TDD configuration information.

In some examples, the network device may further transmit the TDD configuration information to the smart repeater through a semi-static RRC signaling.

In some examples, the first signal and the second signal may respectively correspond to different TDD configuration information; or the first signal and the second signal may correspond to the same TDD configuration information.

In some examples, the RRC signaling may further include a first signal identifier and/or a second signal identifier corresponding to each piece of TDD configuration information to indicate a correspondence between the TDD configuration information and both of the first signal and the second signal. The identifier may be any information capable of uniquely determining the signal, such as carrier information for transmitting corresponding signals, which is not limited in the disclosure.

In the disclosure, after establishing a connection with the smart repeater, the network device may transmit the RRC signaling including the TDD configuration information to the smart repeater. The TDD configuration information may include the corresponding first signal identifier or second signal identifier. The configuration information may further include the TDD configuration information. For example, D denotes downlink, U denotes uplink, and F denotes free (which may be either uplink or downlink). The TDD configuration information is applicable to the first signal and the second signal respectively.

As illustrated in FIG. 5, the TDD configuration information includes carrier frequency information for the first signal and the second signal. CC#2 is used for forwarding (i.e., receiving or transmitting the first signal), and CC#1 is used for receiving or transmitting a self-signal of the smart repeater (i.e., receiving or transmitting the second signal). If a TDD configuration corresponding to the second signal is DFFFFUUFFFFDDUUU, the smart repeater receives and demodulates the second signal (i.e., a physical downlink control channel (PDCCH) signal) in the first slot, waits for a further indication from a network at positions of second to fifth slots, and transmits the second signal (such as an acknowledge (ACK)/not acknowledge (NACK) signal) at positions of sixth to seventh slots. If a TDD configuration corresponding to the first signal is DDDDUUUDDDDDDDDU, the smart repeater may receive the uplink signal transmitted by the network device at time positions of first to fourth slots and transmit the uplink signal transmitted by the terminal device at time positions of fifth to seventh slots.

In the disclosure, the network device may transmit the TDD configuration information to the smart repeater through the RRC signaling. In this way, by means of TDD configuration information, at least one of the receiving behavior or the transmitting behavior for each signal at the specific time may be determined, such that control on each uplink or downlink signal by the smart repeater is realized, thereby further ensuring the correctness of receiving or transmitting information.

FIG.15 is a flowchart illustrating a method for controlling a smart repeater according to an embodiment of the disclosure. The method is performed by a network device. As illustrated in FIG. 15, the method may include, but is not limited to, the following.

At step 1501, TDD configuration information is transmitted to the smart repeater. The configuration information is used for indicating at least one of a receiving behavior or a transmitting behavior of the smart repeater for a first signal and/or a second signal at a specific time.

In the disclosure, a specific implementation process of the step 1501 may refer to detailed description in any embodiment of the disclosure, which is not repeated herein.

At step 1502, indication information is transmitted to the smart repeater through media access control (MAC) or downlink control information (DCI). The indication information is used for realizing any one of: activating the TDD configuration information, activating at least one of multiple pieces of TDD configuration information, deactivating the TDD configuration information, deactivating at least one of a plurality of pieces of TDD configuration information, or indicating, to the smart repeater, an uplink or downlink signal corresponding to a time at which an uplink or downlink behavior is not indicated in the TDD configuration information.

In the disclosure, after transmitting the TDD configuration information to the smart repeater, the network device may further activate the TDD configuration information based on the indication information transmitted through MAC or DCI. The indication information may include identifier information of a TDD configuration to be activated. In this way, the smart repeater may determine an activated TDD configuration based on the identifier of the TDD configuration. The identifier of the TDD configuration may be any information capable of uniquely determining the TDD configuration, such as a serial number of the TDD configuration.

Or, after assigning a plurality of pieces of TDD configuration information to the smart repeater, the network device may further activate at least one of the plurality of pieces of TDD configuration information based on the indication information transmitted through MAC or DCI.

Or, after activating the TDD configuration information based on the indication information transmitted through MAC or DCI, the network device may further deactivate the TDD configuration information based on the indication information transmitted through MAC or DCI. There may be one or more pieces of deactivated TDD configuration information.

In the disclosure, the network device may further indicate, to the smart repeater using the indication information transmitted through MAC or DCI, the uplink or downlink signal corresponding to the time at which at least one of the uplink situation or the downlink situation is not indicated in the TDD configuration information. For example, as illustrated in FIG. 4, at least one of the uplink situation or the downlink situation at the position of the sixth slot is not indicated in the TDD configuration. In this case, at least one of the uplink situation or the downlink situation at the position of the sixth slot may be indicated through an MAC CE and/or a DCI command.

In some examples, the above-mentioned "uplink or downlink signal corresponding to the time at which at least one of the uplink situation or the downlink situation is not indicated in the TDD configuration information" indicated to the smart repeater a may be an uplink or downlink signal corresponding to a position of one slot or TDD configurations corresponding to positions of a plurality of consecutive symbols in one slot, which is not limited in the disclosure.

FIG. 7A is a schematic diagram illustrating the indication, through the MAC or DCI, of the uplink or downlink signal corresponding to the time at which at least one of the uplink situation or the downlink situation is not indicated in the TDD configuration information. In FIG. 7, D\U\F denotes specific contents of the TDD configuration, where D denotes receiving a downlink signal, U denotes transmitting an uplink signal, and F denotes that the uplink or downlink is uncertain. The TDD configuration transmitted by the network device to the smart repeater is DDDDUFFUUU, where at least one of the uplink situation or the downlink situation on the time position of the seventh slot is uncertain. In this case, the TDD configuration information corresponding to the plurality of consecutive symbols on the time position of the seventh slot may be further indicated through MAC or DCI, as illustrated in FIG. 7B.

In the disclosure, after transmitting, to the smart repeater, the TDD configuration information used for indicating at least one of the receiving behavior or the transmitting behavior of the smart repeater for the first signal and/or the second signal at the specific time, the network device may further transmit the indication information to the smart repeater through MAC or DCI so as to further set the TDD configuration. In this way, by means of TDD configuration information, at least one of the receiving behavior or the transmitting behavior for each signal at the specific time may be determined, such that control on each uplink or downlink signal by the smart repeater is realized, thereby further ensuring the correctness of receiving or transmitting information.

In the disclosure, the network device may assign one piece of TDD configuration information to the first signal and assign a plurality of pieces of TDD configuration information to the second signal. Therefore, the network device may indicate the TDD configuration information corresponding to the first signal only through the RRC signaling, indicate the plurality of pieces of TDD configuration information corresponding to the second signal through the RRC signaling, and indicate the TDD configuration information to be used by the second signal through the MAC or DCI.

FIG.16 is a flowchart illustrating a method for controlling a smart repeater according to an embodiment of the disclosure. The method is performed by a network device. As illustrated in FIG. 16, the method may include, but is not limited to, the following.

At step 1601, TDD configuration information corresponding to a first signal and TDD configuration information corresponding to a second signal are transmitted to the smart repeater through a semi-static RRC signaling.

In some examples, TDD configuration information corresponding to the first signal and a plurality of pieces of TDD configuration information corresponding to the second signal may also be transmitted to the smart repeater through two semi-static RRC signaling.

At step 1602, indication information corresponding to the second signal is transmitted to the smart repeater through the MAC or the DCI. The indication information is used for activating at least one of the plurality of pieces of TDD configuration information.

In the disclosure, specific implementation processes of the step 1601 to the step 1602 may refer to detailed description in any embodiment of the disclosure, which are not repeated herein.

In the disclosure, after transmitting the TDD configuration information corresponding to the first signal and the TDD configuration information corresponding to the second signal to the smart repeater through the semi-static RRC signaling, the network device may transmit, to the smart repeater through MAC or DCI, the indication information, corresponding to the second signal, for activating at least one of the plurality of pieces of TDD configuration information. In this way, by means of the TDD configuration information, at least one of the receiving behavior or the transmitting behavior for each signal at the specific time may be determined, such that control on each uplink or downlink signal by the smart repeater is realized, thereby further ensuring the correctness of receiving or transmitting information.

In the disclosure, the TDD configuration information corresponding to the first signal does not include the time at which the uplink or downlink behavior is not indicated, and the TDD configuration information corresponding to the second signal may include the time at which the uplink or downlink behavior is not indicated. Therefore, the network device may indicate the TDD configuration information corresponding to the first signal only through the RRC signaling, indicate the plurality of pieces of TDD configuration information corresponding to the second signal through the RRC signaling, and indicate the uplink or downlink signal corresponding to the time at which the uplink or downlink behavior is not indicated in TDD configuration information corresponding to the second signal through MAC or DCI.

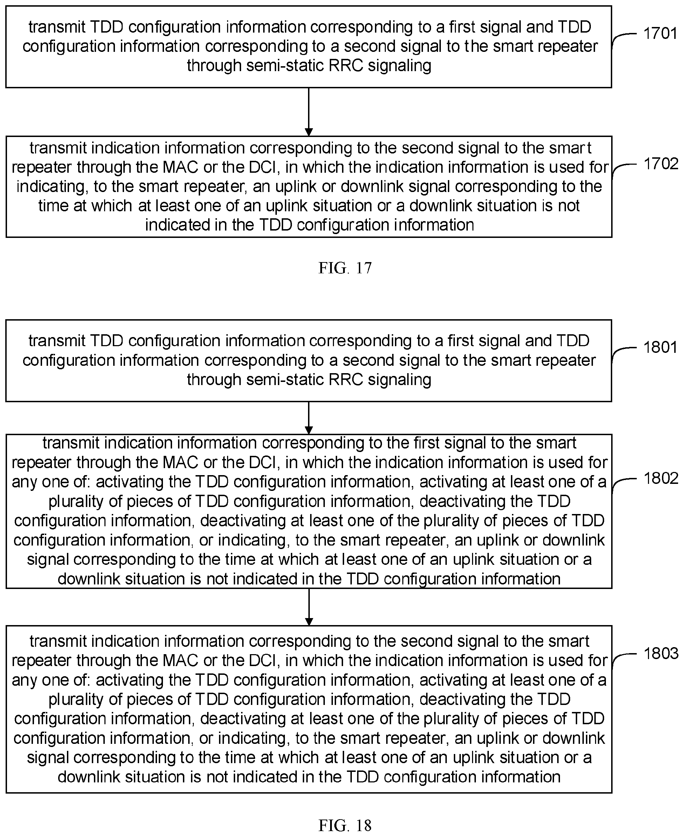

FIG.17 is a flowchart illustrating a method for controlling a smart repeater according to an embodiment of the disclosure. The method is performed by a network device. As illustrated in FIG. 17, the method may include, but is not limited to, the following.

At step 1701, TDD configuration information corresponding to a first signal and TDD configuration information corresponding to a second signal are transmitted to the smart repeater through a semi-static RRC signaling.

At step 1702, indication information corresponding to the second signal is transmitted to the smart repeater through an MAC or a DCI. The indication information is used for indicating, to the smart repeater, an uplink or downlink signal corresponding to the time at which at least one of the uplink situation or the downlink situation is not indicated in the TDD configuration information.

In the disclosure, specific implementation processes of the step 1701 to the step 1702 may refer to detailed description in any embodiment of the disclosure, which are not repeated herein.

In the disclosure, after transmitting the TDD configuration information corresponding to the first signal and the TDD configuration information corresponding to the second signal to the smart repeater through the semi-static RRC signaling, the network device may transmit, to the smart repeater through the MAC or the DCI, the indication information, corresponding to the second signal, used for indicating the uplink or downlink signal corresponding to the time at which the uplink or downlink behavior is not indicated in the TDD configuration information. In this way, by means of TDD configuration information, at least one of the receiving behavior or the transmitting behavior for each signal at the specific time may be determined, such that control on each uplink or downlink signal by the smart repeater is realized, thereby further ensuring the correctness of receiving or transmitting information.

In the disclosure, the first signal and the second signal may correspond to different TDD configuration information, and both the first signal and the second signal requires the further indication of TDD configuration related information. For example, when both the first signal and the second signal need the further indication of the uplink or downlink signal corresponding to the time at which the uplink or downlink behavior is not indicated in the TDD configuration information, the network device may indicate, through the RRC signaling, the TDD configuration information corresponding to the first signal and the TDD configuration information corresponding to the second signal, and further indicate, through MAC or DCI, the TDD configuration related information corresponding to the first signal and the TDD configuration related information corresponding to the second signal.

FIG. 18 is a flowchart illustrating a method for controlling a smart repeater according to an embodiment of the disclosure. The method is performed by a network device. As illustrated in FIG. 18, the method may include, but is not limited to, the following.

At step 1801, TDD configuration information corresponding to a first signal and TDD configuration information corresponding to a second signal are transmitted to the smart repeater through a semi-static RRC signaling.

At step 1802, indication information corresponding to the first signal is transmitted to the smart repeater through MAC or DCI. The indication information is used for realizing any one of: activating the TDD configuration information, activating at least one of multiple pieces of TDD configuration information, deactivating the TDD configuration information, deactivating at least one of the plurality of pieces of TDD configuration information, or indicating, to the smart repeater, an uplink or downlink signal corresponding to a time at which at least one of an uplink situation or the downlink situation is not indicated in the TDD configuration information.

At step1803, indication information corresponding to the second signal is transmitted to the smart repeater through MAC or DCI. The indication information is used for realizing any one of: activating the TDD configuration information, activating at least one of multiple pieces of TDD configuration information, deactivating the TDD configuration information, deactivating at least one of the plurality of pieces of TDD configuration information, or indicating, to the smart repeater, an uplink or downlink signal corresponding to a time at which at least one of an uplink situation or an downlink situation is not indicated in the TDD configuration information.

In the disclosure, specific implementation processes of the step 1801 to the step 1803 may refer to detailed description in any embodiment of the disclosure, which are not repeated herein.

In the disclosure, the network device may transmit the TDD configuration information corresponding to the first signal and the TDD configuration information corresponding to the second signal to the smart repeater through the semi-static RRC signaling, transmit the indication information corresponding to the first signal to the smart repeater through MAC or DCI, and then transmit the indication information corresponding to the second signal to the smart repeater through MAC or DCI. In this way, by means of the TDD configuration information, at least one of the receiving behavior or the transmitting behavior for each signal at the specific time may be determined, such that control on each uplink or downlink signal by the smart repeater is realized, thereby further ensuring the correctness of receiving or transmitting information.

In the disclosure, the first signal and the second signal may correspond to the same TDD configuration information, but TDD configuration related information, that needs to be further indicated, of the first signal and the second signal may be different. For example, the uplink or downlink signal corresponding to the time at which at least one of the uplink situation or the downlink situation is not indicated in the TDD configuration information is different for the first signal and the second signal. The network device may indicate the TDD configuration information corresponding to the first signal and the second signal through the RRC signaling, and further indicate the TDD configuration related information corresponding to the first signal and the TDD configuration related information corresponding to the second signal through MAC or DCI.

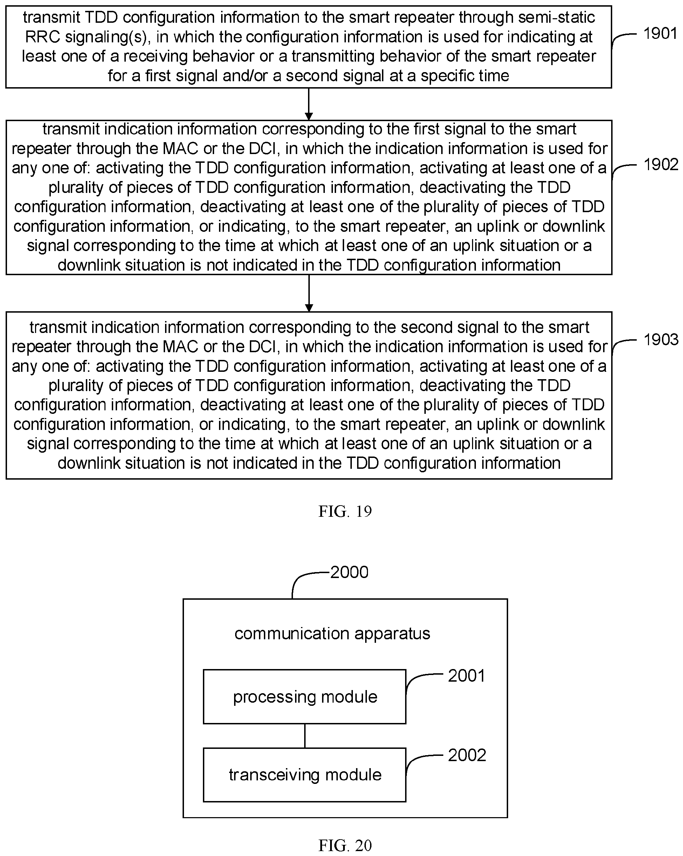

FIG. 19 is a flowchart illustrating a method for controlling a smart repeater according to an embodiment of the disclosure. The method is performed by a network device. As illustrated in FIG. 19, the method may include, but is not limited to, the following.

At step 1901, TDD configuration information is transmitted to the smart repeater through a semi-static RRC signaling. The configuration information is used for indicating at least one of a receiving behavior or a transmitting behavior of the smart repeater for a first signal and/or a second signal at a specific time.

At step 1902, indication information corresponding to the first signal is transmitted to the smart repeater through the MAC or the DCI. The indication information is used for realizing any one of: activating the TDD configuration information, activating at least one of multiple pieces of TDD configuration information, deactivating the TDD configuration information, deactivating at least one of the plurality of pieces of TDD configuration information, or indicating, to the smart repeater, an uplink or downlink signal corresponding to the time at which at least one of the uplink situation or the downlink situation is not indicated in the TDD configuration information.

At step1903, indication information corresponding to the second signal is transmitted to the smart repeater through the MAC or the DCI. The indication information is used for realizing any one of: activating the TDD configuration information, activating at least one of multiple pieces of TDD configuration information, deactivating the TDD configuration information, deactivating at least one of the plurality of pieces of TDD configuration information, or indicating, to the smart repeater, an uplink or downlink signal corresponding to a time at which at least one of an uplink situation or a downlink situation is not indicated in the TDD configuration information.

In the disclosure, specific implementation processes of the step 1901 to the step 1903 may refer to detailed description in any embodiment of the disclosure, which are not repeated herein.

In the disclosure, the network device may transmit, to the smart repeater through the semi-static RRC signaling, the TDD configuration information used for indicating at least one of the receiving behavior or the transmitting behavior of the smart repeater for the first signal and/or the second signal at the specific time, transmit the indication information corresponding to the first signal to the smart repeater through MAC or DCI, and transmit the indication information corresponding to the second signal to the smart repeater through MAC or DCI. In this way, by means of the TDD configuration information, at least one of the receiving behavior or the transmitting behavior for each signal at the specific time may be determined, such that control on each uplink or downlink signal by the smart repeater is realized, thereby further ensuring the correctness of receiving or transmitting information. In this way, by means of the TDD configuration information, at least one of the receiving behavior or the transmitting behavior for each signal at the specific time may be determined, such that control on each uplink or downlink signal by the smart repeater is realized, thereby further ensuring the correctness of receiving or transmitting information.

FIG. 20 is a schematic structural diagram illustrating a communication apparatus 200 according to an embodiment of the application. The communication apparatus 200 illustrated in FIG. 20 may include a transceiving module 2001 and a processing module 2002. The transceiving module 2001 may include a transmitting module and/or a receiving module, the transmitting module is configured to realize a transmitting function, the receiving module is configured to realizea receiving function, and the transceiving module 2001 may realize the transmitting function and/or the receiving function.

It is understandable that the communication apparatus 200 may be a smart repeater, an apparatus in the smart repeater, or an apparatus which may be matched with the smart repeater.

The communication apparatus 200 is located at a smart repeater side.

The transceiving module 2001 is configured to receive time-division duplex (TDD) configuration information that is transmitted by a network device. The configuration information is used for indicating at least one of a receiving behavior or a transmitting behavior of the smart repeater for a first signal and/or a second signal at a specific time.

In some examples, the first signal is at least one of: a forwarded uplink signal transmitted by a terminal device, or a forwarded downlink signal transmitted by the network device; and
the second signal is at least one of: an uplink signal self-generated by the smart repeater and used for direct communication with the network device, or a downlink signal transmitted by the network device to the smart repeater and used for direct communication with the smart repeater.

In some examples, the communication apparatus further includes:
the processing module 2002 configured to: in response to the first signal and/or the second signal being indicated as a downlink signal, forward, by the smart repeater, the downlink signal from the network device to the terminal device at a specific time corresponding to the first signal, and/or receive a control signal transmitted by the network device at a specific time corresponding to the second signal and at least demodulate and/or decode the control signal.

In some examples, the above-mentioned processing module 2002 is further configured to:
in response to the first signal and/or the second signal being indicated as the uplink signal, forward, by the smart repeater, the uplink signal from the terminal device to the network device at a specific time corresponding to the first signal, and/or transmit a self-generated uplink signal that is at least demodulated and/or decoded to the network device at a specific time corresponding to the second signal.

In some examples, the first signal and the second signal correspond to different TDD configuration information;
or, the first signal and the second signal correspond to the same TDD configuration information.

In some examples, the above-mentioned transceiving module 2001 is configured to:
receive, through a radio resource control (RRC) signaling, the TDD configuration information that is transmitted by the network device.

In some examples, the RRC signaling further includes a first signal identifier and/or a second signal identifier corresponding to each piece of TDD configuration information.

In some examples, the above-mentioned transceiving module 2001 is further configured to:
receive indication information transmitted by the network device through an MAC or a DCI. The indication information is used for realizing any one of: activating the TDD configuration information, activating at least one of multiple pieces of TDD configuration information, deactivating the TDD configuration information, deactivating at least one of the plurality of pieces of TDD configuration information, or indicating, to the smart repeater, an uplink or downlink signal corresponding to the time at which at least one of an uplink situation or a downlink situation is not indicated in the TDD configuration information.

In some examples, the above-mentioned processing module 2002 is further configured to:
in response to at least one of an uplink situation or a downlink situation of a signal corresponding to a specific time not being indicated in the configuration information, determine that the specific time corresponds to an uplink signal;
or, in response to at least one of an uplink situation or a downlink situation of a signal corresponding to a specific time not being indicated in the configuration information, determining that the specific time corresponds to a downlink signal.

In the disclosure, the smart repeater may receive the TDD configuration information, transmitted by the network device, used for indicating at least one of the receiving behavior or the transmitting behavior of the smart repeater for the first signal and/or the second signal at the specific time. In this way, by means of the TDD configuration information, at least one of the receiving behavior or the transmitting behavior for each signal at the specific time may be determined, such that control on each uplink or downlink signal by the smart repeater is realized, thereby further ensuring the correctness of receiving or transmitting information.

It is understandable that the communication apparatus 200 may be a network device, an apparatus in the network device, or an apparatus which may be matched with the network device.

The communication apparatus 200 is located at a network device side.

The transceiving module 2001 is configured to transmit time-division duplex (TDD) configuration information to a smart repeater. The configuration information is used for indicating at least one of a receiving behavior or a transmitting behavior of the smart repeater for a first signal and/or a second signal at a specific time.

In some examples, the first signal is at least one of: a forwarded uplink signal transmitted by a terminal device, or a forwarded downlink signal transmitted by the network device; and
the second signal is at least one of: an uplink signal, self-generated by the smart repeater, used for direct communication with the network device, or a downlink signal, transmitted by the network device to the smart repeater, used for direct communication with the smart repeater.

In some examples, the first signal and the second signal correspond to different TDD configuration information;
or, the first signal and the second signal correspond to the same TDD configuration information.

In some examples, the above-mentioned transceiving module 2001 is configured to:
transmit the TDD configuration information to the smart repeater through a RRC signaling.

In some examples, the RRC signaling further includes a first signal identifier and/or a second signal identifier corresponding to each piece of TDD configuration information.

In some examples, the above-mentioned transceiving module 2001 is further configured to:
transmit indication information to the smart repeater through an MAC or a DCI. The indication information is used for realizing any one of: activating the TDD configuration information, activating at least one of multiple pieces of TDD configuration information, deactivating the TDD configuration information, deactivating at least one of the plurality of pieces of TDD configuration information, or indicating, to the smart repeater, an uplink or downlink signal corresponding to a time at which at least one of an uplink situation or a downlink situation is not indicated in the TDD configuration information.

In the disclosure, the network device may transmit, to the smart repeater, the TDD configuration information used for indicating at least one of the receiving behavior or the transmitting behavior of the smart repeater for the first signal and/or the second signal at the specific time. In this way, by means of the TDD configuration information, at least one of the receiving behavior or the transmitting behavior for each signal at the specific time may be determined, such that control on each uplink or downlink signal by the smart repeater is realized, thereby further ensuring the correctness of receiving or transmitting information.

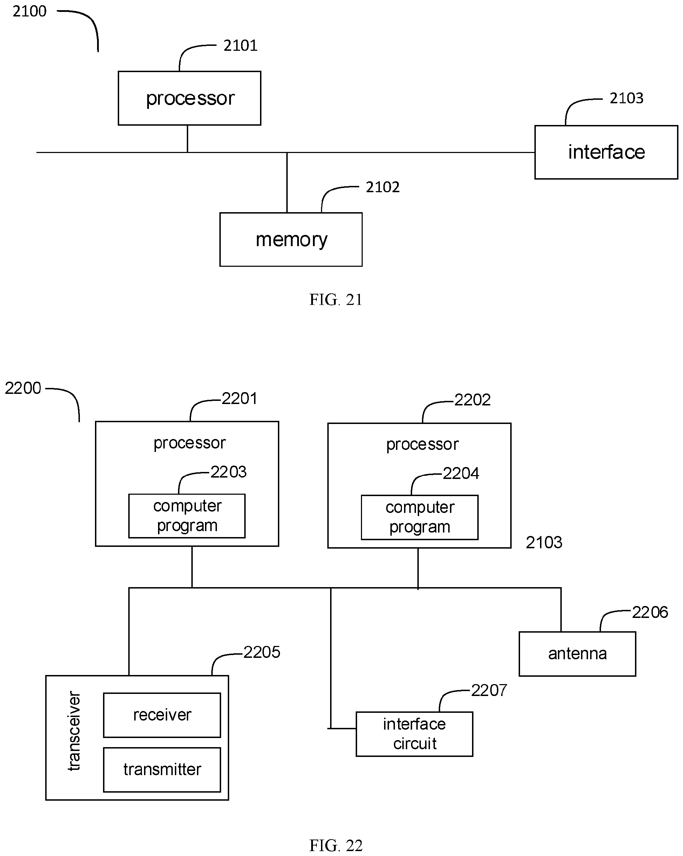

FIG. 21 is a schematic structural diagram illustrating another communication apparatus 210 according to an embodiment of the application. The communication apparatus 210 may be a network device, or a smart repeater, or a chip, a chip system or a processor, etc. supporting the network device to realize the above-mentioned method, or a chip, a ship system or a processor, etc. supporting the smart repeater to realize the above-mentioned method. This apparatus may be used for realizing the method described in the above-mentioned method embodiment, and may specifically refer to the description for the above-mentioned method embodiment.

The communication apparatus 210 may include one or more processors 2101. The processor 2101 may be a general-purpose processor or a special-purpose processor, etc. For example, the processor may be a baseband processor or a central processor. The baseband processor may be used for processing a communication protocol and communication data, and the central processor may be used for controlling a communication apparatus (such as a base station, a baseband chip, a terminal device, a terminal device chip, and a DU or a CU), executing a computer program, and processing data of the computer program.

Optionally, the communication apparatus 210 may further include one or more memories 2102 in which a computer program 2104 may be stored, and the processor 2101 executes the computer program 2104, such that the communication apparatus 210 executes the method described in the above-mentioned method embodiment. Optionally, the memory 2102 may further store data. The communication apparatus 210 and the memory 2102 may be disposed alone or integrated together.

Optionally, the communication apparatus 210 may further include a transceiver 2105 and an antenna 2106. The transceiver 2105 may be referred to as a transceiving unit, a transceiving machine, or a transceiving circuit, etc., and is used for realizing a transceiving function. The transceiver 2105 may include a receiver and a transmitter, the receiver may be referred to as a receiving machine or a receiving circuit, etc., and is used for realizing a receiving function; and the transmitter may be referred to as a transmitting machine or a transmitting circuit, etc., and is used for realizing a transmitting function.

Optionally, the communication apparatus 210 may further include one or more interface circuits 2107. The interface circuit 2107 is used for receiving code instructions and transmitting the code instructions to the processor 2101. The processor 2101 runs the code instructions, such that the communication apparatus 210 executes the method described in the above-mentioned method embodiment.

The communication apparatus 210 is a smart repeater: the processor 2101 is used for executing step 1202, step 1203, etc., in FIG. 12.

The communication apparatus 210 is a network device: the transceiver 2105 is used for executing step 1301 in FIG. 13; step 1401 in FIG. 14; step 1501 and step 1502 in FIG. 15; step 1601, step 1602 and step 1603 in FIG. 16; and step 1701, step 1702, step 1703, etc., in FIG. 17.

In an implementation, the processor 2101 may include a transceiver used for realizing receiving and transmitting functions. For example, this transceiver may be a transceiving circuit, or an interface, or an interface circuit. The transceiving circuit, the interface or the interface circuit used for realizing the receiving and transmitting functions may be separated or integrated together. The above-mentioned transceiving circuit, interface or interface circuit may be used for reading and writing codes/data, or the above-mentioned transceiving circuit, interface or interface circuit may be used for transmitting or delivering signals.

In an implementation, the processor 2101 may store a computer program 2103, and the computer program 2103 runs on the processor 1001, such that the communication apparatus 210 executes the method described in the above-mentioned method embodiment. The computer program 2103 may be solidified in the processor 2101, in this case, the processor 2101 may be realized by hardware.

In an implementation, the communication apparatus 210 may include a circuit which may realize the transmitting or receiving or communication function in the above-mentioned method embodiment. The processor and the transceiver that are described in the disclosure may be realized on an integrated circuit (IC), an analog IC, a radio frequency integrated circuit (RFIC), a mixed signal IC, an application specific integrated circuit (ASIC), a printed circuit board (PCB), an electronic device, etc. This processor and the transceiver may also be made by using various IC process technologies, such as a complementary metal oxide semiconductor (CMOS), an nMetal-oxide-semiconductor (NMOS), a positive channel metal oxide semiconductor (PMOS), a bipolar junction transistor (BJT), a bipolar CMOS (BiCMOS), silicon germanium (SiGe), and gallium arsenide (GaAs).

The communication apparatus described in above embodiment may be a network device or an access network device (such as the terminal device in the above-mentioned method embodiment), however, the scope of the communication apparatus described in the disclosure is not limited thereto, and it is possible that the structure of the communication apparatus is not limited by FIG. 21. The communication apparatus may be an independent device or a part of a larger device. For example, the communication apparatus may be:
an independent integrated circuit (IC), or a chip, or a chip system, or a subsystem;
a set provided with one or more ICs, and optionally, this set of the ICs may also include a storage component used for storing data and a computer program;
an ASIC, such as a Modem;
a module that may be embedded into other devices;
a receiver, a terminal device, a smart terminal device, a cell phone, a wireless device, a handset, a mobile unit, a vehicle-mounted device, a network device, a cloud device, an artificial smart device, etc.; and
other devices, etc.

A situation that the communication apparatus may be a chip or a chip system may refer to the schematic structural diagram of a chip shown in FIG. 22. The chip shown in FIG. 22 includes a processor 2201 and an interface 2203. There may be one or more processors 2201, and there may be a plurality of interfaces 2203.

For a situation that the chip is used for realizing the function of the smart repeater in embodiments of the disclosure:
the interface 2203 is used for executing step 201 in FIG. 2; step 401 in FIG. 4; or step 601 and step 602 in FIG. 6; step 801 and step 802 in FIG. 8; step 901 and step 902 in FIG. 9; step 1001, step 1002 and step 1003 in FIG. 10; step 1101, step 1102 and step 1103 in FIG. 11; step 1201 in FIG. 12, etc.

For a situation that the chip is used for realizing the function of the network device in embodiments of the disclosure:
the interface 2203 is used for executing step 1301 in FIG. 13; step 1401 in FIG.14; step 1501 and step 1502 in FIG.15; step 1601, step 1602 and step 1603 in FIG. 16; step 1701, step 1702 and step 1703 in FIG. 17, etc.

Optionally, the chip further includes a memory 2203, wherein the memory 2203 is used for storing a necessary computer program and data.

It may be further known by the skilled in the art that various illustrative logical blocks and steps listed in embodiments of the disclosure may be realized through electronic hardware, computer software or a combination thereof. Whether such a function is realized by hardware or software depends on a specific application and design requirements of a whole system. For each specific application, the skilled in the art may realize the function by using various methods, however, such a realization should be understood as falling within the protection scope of embodiments of the disclosure.

The disclosure further provides a computer-readable storage medium having instructions stored thereon, and the instructions, when executed by a computer, realize the function in any one of the above-mentioned method embodiments.

The disclosure further provides a computer program product which, when executed by a computer, realizes the function in any one of the above-mentioned method embodiments.

The above-mentioned embodiments may be entirely or partially realized through software, hardware, firmware or any combinations thereof. When realized by using the software, embodiments may be entirely or partially realized in a form of a computer program product. The computer program product includes one or more computer programs. When the computer programs are loaded and executed on a computer, processes or functions based on embodiments of the disclosure are entirely or partially generated. The computer may be a general-purpose computer, a special-purpose computer, a computer network, or other programmable apparatuses. The computer programs may be stored in a computer-readable storage medium, or transmitted from one computer-readable storage medium to another computer-readable storage medium, for example, the computer programs may be transmitted from one website, computer, server or data center to another website, computer, server or data center in a wired (such as a coaxial cable, an optical fiber, and a digital subscriber line (DSL)) or wireless (such as infrared, wireless, and microwave) manner. The computer-readable storage medium may be any available medium that may be accessed by the computer or an integrated data storage device such as a server and a data center including one or more available media. The available medium may be a magnetic medium (such as floppy disk, a hard disk, and a cassette), an optical medium (such as a high-density digital video disc (DVD)), or a semiconductor medium (such as a solid state disk (SSD)), etc.

It may be understood by those of ordinary skilled in the art that various digital numbers such as first and second involved in the disclosure are only for distinguishing for facilitating description, are not intended to limit the scope of embodiments of the disclosure, but also denote a chronological order.

"At least one" in the disclosure may be described as one or more, "a plurality of" may be two, three, four or more, which is not limited in the disclosure. In embodiments of the disclosure, for a technical feature, technical features in such a technical feature are distinguished by "first", "second", "third", "A", "B", "C", "D", etc., and there are no chronological or size order among the technical features described by the "first", "second", "third", "A", "B", "C", and "D".

A corresponding relationship shown in each table in the disclosure may be configured or predefined. A value of information in each table is only example, and other values may be configured, which is not limited in the disclosure. When a corresponding relationship between the information and each parameter is configured, it is not necessarily required to configure all corresponding relationships shown in each table. For example, in the tables in the disclosure, it is also possible that corresponding relationships shown in certain lines are not configured. For another example, appropriate deformation adjustment, such as splitting and merging, may be made based on the above-mentioned tables. Names of parameters shown in titles in each of the above-mentioned tables may also adopt other names that may be understood by the communication apparatus, and the values or expressions of the parameters thereof may also adopt other values or expressions that may be understood by the communication apparatus. During implementation, each of the above-mentioned tables may also adopt other data structures, such as arrays, queues, containers, stacks, linear tables, pointers, linked lists, trees, graphs, structures, classes, heaps, and hash tables or Hash tables.

Pre-definition in the disclosure may be understood as definition, preliminary definition, storage, pre-storage, pre-negotiation, pre-configuration, solidification, or pre-burning.

Those of ordinary skill in the art may realize that units and algorithm steps in all examples described in conjunction with embodiments disclosed in the disclosure may be realized by electronic hardware, computer software or a combination of both. Whether these functions are realized by hardware or software depends on specific applications and design constraints of technical solutions. The skilled in the art may adopt different methods to realize the described functions in each specific application, which, however, should be considered as falling within the scope of the disclosure.

It may be clearly known by the skilled in the art that, for facilitating and simplifying the description, specific working processes of the above-mentioned system, apparatus and unit may refer to corresponding processes in the above-mentioned method embodiments so as to be no longer repeated herein.

The above descriptions are only specific implementations of the disclosure, but the protection scope of the disclosure is not limited thereto. Any variations or replacements that may be readily envisioned by those skilled in the art within the technical scope disclosed by the disclosure should fall within the protection scope of the disclosure. Therefore, the protection scope of the disclosure should be subject to the protection scope defined in the claims.

## Claims

1. A method for controlling a smart repeater, performed by a smart repeater, comprising:
receiving time-division duplex (TDD) configuration information transmitted by a network device, wherein the configuration information is used for indicating at least one of a receiving behavior or a transmitting behavior of the smart repeater for a first signal and/or a second signal at a specific time.

2. The method of claim 1, wherein
the first signal is a forwarded uplink signal transmitted by a terminal device, and/or a forwarded downlink signal transmitted by the network device; and
the second signal is an uplink signal, self-generated by the smart repeater, used for a direct communication with the network device, and/or
a downlink signal, transmitted to the smart repeater by the network device, used for a direct communication with the smart repeater.

3. The method of claim 1, further comprising:
in response to the first signal and/or the second signal being indicated as a downlink signal, forwarding, by the smart repeater, the downlink signal from the network device to the terminal device at the specific time corresponding to the first signal, and/or
receiving a control signal transmitted by the network device at the specific time corresponding to the second signal and at least demodulating and/or decoding the control signal.

4. The method of claim 1, further comprising:
in response to the first signal and/or the second signal being indicated as an uplink signal, forwarding, by the smart repeater, the uplink signal from the terminal device to the network device at the specific time corresponding to the first signal, and/or
transmitting a self-generated uplink signal that is at least demodulated and/or decoded to the network device at the specific time corresponding to the second signal.

5. The method of claim 1, wherein
the first signal and the second signal correspond to different TDD configuration information; or the first signal and the second signal correspond to a same TDD configuration information.

6. The method of claim 1, wherein receiving the TDD configuration information that is transmitted by a network device comprises:
receiving, through a Radio Resource Control (RRC) signaling, the TDD configuration information that is transmitted by the network device.

7. The method of claim 6, wherein the RRC signaling further comprises a first signal identifier and/or a second signal identifier corresponding to each piece of TDD configuration information.

8. The method of claim 7, further comprising:
receiving indication information transmitted by the network device through a media access control (MAC) or downlink control information (DCI), wherein the indication information is used for any one of: activating the TDD configuration information, activating at least one of a plurality of pieces of TDD configuration information, deactivating the TDD configuration information, deactivating at least one of the plurality of pieces of TDD configuration information, or indicating, to the smart repeater, an uplink or downlink signal corresponding to a time at which an uplink or downlink situation is not indicated in the TDD configuration information.

9. The method of any one of claims 1 to 8, further comprising:
in response to an uplink or downlink situation of a signal corresponding to any specific time not being indicated in configuration information, determining that the specific time corresponds to an uplink signal; or
in response to an uplink or downlink situation of a signal corresponding to any specific time not being indicated in the configuration information, determining that the specific time corresponds to a downlink signal.

10. A method for controlling a smart repeater, performed by a network device, comprising:
transmitting time-division duplex (TDD) configuration information to a smart repeater, wherein the configuration information is used for indicating at least one of a receiving behavior or a transmitting behavior of the smart repeater for a first signal and/or a second signal at a specific time.

11. The method of claim 10, wherein
the first signal is a forwarded uplink signal transmitted by a terminal device, and/or
a forwarded downlink signal transmitted by the network device; and
the second signal is an uplink signal, self-generated by the smart repeater, used for a direct communication with the network device, and/or
a downlink signal, transmitted by the network device to the smart repeater, used for a direct communication with the smart repeater.

12. The method of claim 10, wherein
the first signal and the second signal correspond to different TDD configuration information; or
the first signal and the second signal correspond to a same TDD configuration information.

13. The method of claim 10, wherein transmitting the TDD configuration information to the smart repeater comprises:
transmitting the TDD configuration information to the smart repeater through a Radio Resource Control (RRC) signaling.

14. The method of claim 13, wherein the RRC signaling further comprises a first signal identifier and/or a second signal identifier corresponding to each piece of TDD configuration information.

15. The method of claim 10, further comprising:
transmitting indication information to the smart repeater through a media access control (MAC) or downlink control information (DCI), wherein the indication information is used for any one of: activating the TDD configuration information, activating at least one of a plurality of pieces of TDD configuration information, deactivating the TDD configuration information, deactivating at least one of the plurality of pieces of TDD configuration information, or indicating, to the smart repeater, an uplink or downlink signal corresponding to a time at which an uplink or downlink situation is not indicated in the TDD configuration information.

16. A communication apparatus, comprising:
a transceiving module, configured to receive time-division duplex (TDD) configuration information that is transmitted by a network device, wherein the configuration information is used for indicating at least one of a receiving behavior or a transmitting behavior of a smart repeater for a first signal and/or a second signal at a specific time.

17. A communication apparatus, comprising:
a transceiving module, configured to transmit time-division duplex (TDD) configuration information to a smart repeater, wherein the configuration information is used for indicating at least one of a receiving behavior or a transmitting behavior of the smart repeater for a first signal and/or a second signal at a specific time.

18. A communication apparatus, comprising a processor and a memory, wherein the memory has a computer program stored thereon, and the processor executes the computer program stored in the memory to cause the apparatus to perform the method of any one of claims 1 to 9.

19. A communication apparatus, comprising a processor and a memory, wherein the memory has a computer program stored thereon, and the processor executes the computer program stored in the memory to cause the apparatus to perform the method of any one of claims 10 to 15.

20. A computer-readable storage medium having instructions stored thereon, wherein when the instructions are executed, the method of any one of claims 1 to 9 is performed.

21. A computer-readable storage medium having instructions stored thereon, wherein when the instructions are executed, the method of any one of claims 10 to 15 is performed.
